# EUROPÄISCHE PATENTSCHRIFT

(11) **EP 1 054 845 B1**
(45) Veröffentlichungstag und Bekanntmachung des Hinweises auf die Patenterteilung: **20.08.2003**
(21) Anmeldenummer: 99906170.8
(22) Anmeldetag: 20.01.1999
(51) Int. Cl.: C04B 26/10, C04B 40/02

(54) **VERFAHREN ZUR HERSTELLUNG VON ENDFORMNAHEN FORMKÖRPERN AUS PRESSMASSEN**
METHOD FOR PRODUCING VIRTUALLY FINISHED MOULDED BODIES FROM MOULDING MATERIALS
PROCEDE POUR PRODUIRE DES CORPS MOULES PRATIQUEMENT FINIS, A PARTIR DE MATIERES A MOULER

(30) Priorität: 12.02.1998 DE 19805608
(43) Veröffentlichungstag der Anmeldung: 29.11.2000
(73) Patentinhaber: DaimlerChrysler AG, 70567 Stuttgart (DE)
(72) Erfinder: LOTZ, Wolfgang, D-70734 Fellbach (DE)
(86) Internationale Anmeldenummer: EP9900341
(87) Internationale Veröffentlichungsnummer: WO99041209

(56) Entgegenhaltungen:
- GB-A- 613 098
- US-A- 4 320 079
- US-A- 4 516 996

## Beschreibung

Die vorliegende Erfindung betrifft ein Verfahren zur Herstellung von endformnahen Formkörpern aus Preßmassen, bei dem Verstärkungsfasern, Faserbündel, Fasergewebe, Fasermatten und/oder in Wirrlage zusammengesetzte Faseragglomerate auf Basis von Kohlenstoff, Stickstoff, Silizium und/oder Bor, ein oder mehrere Bindemittel und ggf. ein oder mehrere Zuschlagstoffe bzw. Füllstoffe zu einer Preßmasse vermischt und in einer Preßform unter Druckeinwirkung zu einem Formkörper gepreßt werden, wobei als Bindemittel ein aushärtbarer carbonisierbarer Kunststoff verwendet wird.

Derartige Formkörper werden auch als Grünlinge bezeichnet. Sie dienen z. Bsp. als Vorkörper innerhalb des Gesamtverfahrens zur Herstellung von C/SiC-Keramikteilen, wie es z. Bsp. aus der DE 44 38 455 Cl sowie aus DE-A-197 11 831 und DE-C-197 11 829 bekannt ist.

Bei diesen bekannten Verfahren werden konditionierte, im allgemeinen mit Pech und/oder carbonisierbarem Kunststoff beschichtete Fasern oder Faserbündel mit Bindemittel und ggf. Füllmitteln bzw. weiteren Zuschlagstoffen vermischt und zu einem endformnahen Grünling gepreßt. Dabei wird das Bindemittel bei Temperaturen über 120°C, im allgemeinen bei etwa 140 bis 180°C, ausgehärtet (Warmaushärten). Der Grünling wird unter Schutzgas zu einem porösen C/C-Körper pyrolysiert, wobei das Bindemittel zu einer Kohlenstoff-Matrix carbonisiert wird. Der poröse C/C-Körper wird anschließend mit flüssigem Metall bzw. flüssigem Silizium schmelzinfiltriert. Silizium reagiert dabei mit der Kohlenstoff-Matrix in großen Anteilen zu keramischem Siliziumcarbid.

Durch den Preßvorgang werden wichtige Materialeigenschaften des späteren C/SiC-Keramikteils bestimmt. Je größer der Preßdruck bzw. je länger die Preßdauer gewählt wird, desto dichter ist der resultierende Grünling und desto geringer ist der spätere Porenanteil. Daraus folgt, daß nach der Schmelzinfiltration auch der Gehalt an Metall bzw. Silizium in keramischen Körper gering ist. Diese Eigenschaften werden insbesondere bei der Herstellung von Bremsscheiben gefordert. Die erwünschte Dichte des Grünlings hängt grundsätzlich vom Ausgangsmaterial ab. Sie kann z. Bsp. in einem Bereich von etwa 1,2 bis 1,5 g/cm³ liegen, woraus ein entsprechend geringer Siliziumgehalt im fertigen C/SiC-Keramikteil resultiert. Die Preßmasse bzw. das entstehende Teil muß daher beim Aushärten einem hohen Druck innerhalb des Formwerkzeuges ausgesetzt sein. Da die Preßmasse kompressibel ist, treten beim Warmaushärten von faserverstärkten Preßmassen mit hohem Anteil an Bindemitteln (bis 50 Gew.-% bezogen auf den Faseranteil) aufgrund des Preßdruckes (und unter Umständen der Erweichung des Bindemittels) zum Teil erhebliche Mengen an den Teilungsfugen des Formwerkzeuges aus.

Das ausgetretene und in der Teilungsfuge sowie außen am Formwerkzeug befindliche Bindemittel härtet ebenfalls mit aus und bereitet beim raschen Entformen des fertigen Grünlings Probleme. Ferner muß das verunreinigte Formwerkzeug von den ausgetretenen Harzresten umständlich und zeitraubend gereinigt werden. Dies führt zu Zeitverzögerungen bei der Produktion, was besonders in der Serienfertigung von Nachteil ist.

Aufgabe der vorliegenden Erfindung ist es demnach, ein Verfahren der oben genannten Art derart zu verbessern, daß die erwähnten Nachteile insbesondere bei der Serienfertigung möglichst nicht auftreten.

Die Lösung besteht darin, daß ein kalt aushärtbares Bindemittel verwendet wird, und die Aushärtereaktion durch Zugabe eines Katalysators gestartet wird, wobei die Druckeinwirkung erst dann eingeleitet wird, wenn die Aushärtereaktion bereits begonnen hat.

Das Merkmal "kalt aushärtbarem Bindemittel" soll dabei alle Substanzen umfassen, die bei Temperaturen bis etwa 100°C aushärten.

Das erfindungsgemäße Verfahren hat den Vorteil, daß eine vorübergehende, thermisch bedingte Viskositätserniedrigung des Bindemittels nicht eintritt, sondern das Bindemittel im Zuge der Aushärtung stetig zunehmend fester wird und in diesem Maß auch der Druck gesteigert werden kann, ohne daß Bindemittelreste in die Formteilungsfugen eintreten oder gar an diesen nach außen austreten. Ein weiterer Vorteil liegt in der Energieeinsparung, da keine Erwärmung erforderlich ist. Ferner läuft die katalytisch initiierte Aushärtereaktion rascher und bei geeigneter Paarung der Reaktionspartner und des Katalysators nach einer Verzögerungsphase sogar "schlagartig" ab. Auch deswegen können Bindemittelreste nicht in die Fugen des Formwerkzeugs eindringen. Die rasche Aushärtereaktion führt, insbesondere bei Wahl eines entsprechenden Bindersystems ferner dazu, daß der resultierende Grünling stabil und maßhaltig ist und nicht aufgrund der Kompressibilität der Verstärkungsfasern beim Öffnen des Formwerkzeugs rückfedert.

Ein dennoch eventuell auftretender Festigkeitsverlust aufgrund der späten Einleitung der Druckeinwirkung, d.h. bei einer bereits fortgeschrittenen Aushärtereaktion, kann aufgrund des erfindungsgemäß möglichen hohen Gesamtbindemittelgehalts in Kauf genommen werden.

Vorteilhafte Weiterbildungen ergeben sich aus den Unteransprüchen.

Eine besonders bevorzugte Weiterbildung besteht darin, die Fasern, Faserbündel und in Wirrlage zusammengesetzten Faseragglomerate vor der Weiterverarbeitung zu einer Preßmasse mit einem carbonisierbaren Kunststoffüberzug zu umhüllen. Diese Hülle kann mit dem Bindemittel identisch oder von ihm verschieden sein. Es sind beliebige Materialkombinationen von Hülle und Bindemittel denkbar. Der Umhüllungskunststoff kann z. Bsp. ein warm aushärtender Kunststoff sein, während das Bindemittel ein kalt aushärtender Kunststoff ist. Der Umnüllungskunststoff kann ein Polyadditionsprodukt oder ein Polykondensationsprodukt sein. Vorteilhafterweise ist der Überzug weicher als das Bindemittel. Der Überzug baut bei Verwendung konditionierter oder sonstwie vorbehandelter Fasern auf der Konditionierungsschicht auf. Vorteilhafterweise zeigen der Umhüllungskunststoff und das Bindemittel ein ähnliches Carbonisierungsverhalten oder Carbonisierungsprofil, so daß bei der Pyrolyse die beiden Komponenten zumindest einigermaßen gleichmäßig in Pyrokohlenstoff umgewandelt werden.

In einem zweiten Schritt wird dann die eigentliche Preßmasse hergestellt. Bei der Aushärtereaktion bilden sich Bindemittelbrücken zwischen den einzelnen umhüllten Fasern, die für den nötigen Zusammenhalt des Preßlings sorgen. Der Vorteil dieser Verfahrensvariante besteht darin, daß den mit dem Kunststoffüberzug umhüllten Fasern entsprechend weniger Bindemittel zur Herstellung einer Preßmasse zugesetzt werden muß, was die Gefahr eines Harzaustritts aus den Fugen des Formwerkzeugs weiter verringert. Außerdem ist keine Konditionierung notwendig, da die derart umhüllten Kohlenstoff-Fasern keiner Konvertierung während der Schmelzinfiltration unterliegen.

Der Umhüllungskunststoff und das Bindemittel können auch so ausgewählt sein, daß nur der Umhüllungskunststoff beim Carbonisieren die Kohlenstoff-Matrix des C/C-Körpers liefert und das Bindemittel lediglich zum Abbinden der Preßmasse dient. Dabei sollte an der Oberfläche der umhüllten Fasern genug Bindemittel vorhanden sein, um die Preßmasse pressen und eine ausreichende Festigkeit erzielen zu können.

Die Schichtdicke und die Härte bzw. Sprödigkeit einer ausgehärteten Kunststoff-Umhüllung der Faserpartikel sind vorteilhafterweise mit dem Ziel optimal aufeinander abgestimmt, einerseits möglichst viel ausgehärtete Kunststoffmasse an die Faserpartikel anzulagern, diese aber andererseits ausreichend flexibel zu halten, daß eine Schüttung aus diesen Partikel unter Druck dennoch weitgehend porenfrei verdichten werden kann. Die Vorumhüllung sollte aber nicht gummielastisch sein, weil sonst die Gefahr besteht, daß die komprimierten Partikel nach dem Aushärten des in der zweiten Stufe zugegebenen Bindemittels unter Aufbrechen der Vorumhüllung beim Öffnen des Formgebungswerkzeuges wieder auffedern. Die geforderte Dichte sowie die gewünschte Form- und Maßhaltigkeit des Grünlings können dann nicht eingehalten werden.

In die Optimierung von Schichtdicke und Härte der Vorumhüllung bzw. des Bindemittels sind vorteilhafterweise noch die Verfahrensparameter Menge, Viskosität im Ausgangszustand sowie die Abstimmung des Zeitverzugs der Aushärtereaktion und der Reaktionsgeschwindigkeit der Aushärtereaktion mit der Verdichtungsgeschwindigkeit während des Preßvorgangs einbezogen.

Dieses Verfahren zur Bildung eines Grünlings mit einem hohen Kunststoffanteil besteht daher aus zwei Stufen oder Verfahrensschritten:

In einer ersten Stufe werden die - ggf. konditionierten - Fasern, Faserbündel und Faseragglomerate mit reaktivem Umhüllungskunststoff vorsichtig vermischt, wobei unter ständigem Rühren der Faserpartikel während der gesamten Aushärtzeit ein Verklumpen der Faserpartikel verhindert wird. Die Menge an zugegebenem Umhüllungskunststoff beträgt vorzugsweise zwischen 15 und 30 Gew.-% bezogen auf die Fasermenge. Durch geeignete Verfahrenssteuerung wird sichergestellt, daß die Faserpartikel vollständig und mit einem relativ starken Kunststoffbelag getränkt und/oder umhüllt werden. Die dabei entstehenden einzelnen Faserpartikel sind nach der Aushärtung eine im wesentlichen schüttfähige Masse mit unregelmäßig geformten "Granuli" stark unterschiedlicher Größe. Durch geeignete Auswahl der Endhärte des Umhüllungskunststoffes und durch empirisch optimierte Umhüllungsstärke kann für eine gewisse Flexibilität der Faserpartikel und eine Kompressibilität einer daraus gebildeten Schüttung gesorgt werden. Das Ziel dieser ersten Stufe liegt darin, einerseits einen möglichst hohen Anteil (bis hin zur vollständigen Menge) des schließlich insgesamt im fertigen Grünling enthaltenen carbonisierbaren Kunststoffes bereits an die Fasern bzw. Faseragglomerate ausgehärtet anzulagern, andererseits aber gleichwohl noch eine gewisse Kompressibilität der umhüllten Faserpartikel aufrecht zu erhalten, so daß die in der zweiten Stufe der Formgebung des Grünlings zu bildende Mischung aus flüssigem Bindemittel und umhüllten Faserpartikeln nur noch einen relativ geringen Kunststoffanteil erfordert.

In einer zweiten Stufe werden die so gebildeten, umhüllten Faserpartikel mit dem Bindemittel zu einer Formpreßmasse angerührt und in das Formwerkzeug dosiert, wo die Formpreßmasse in der oben beschriebenen Weise unter Preßdruck zu dem Grünling ausgehärtet wird. Die zugegebene Menge beträgt vorzugsweise etwa 10 bis 20 Gew.-% bezogen auf die Fasermenge. Dank der Vorumhüllung der Faserpartikel mit ausgehärtetem Umhüllungskunststoff in der großtechnisch weniger kritischen und prozeßsicher beherrschbaren ersten, der Vorbereitungsstufe kann der flüssige Bindemittelanteil in der zweiten Verfahrensstufe der Fertigung geringer ausfallen. Dadurch wird die Gefahr eines Harzaustritts aus den Teilungsfugen des Formgebungswerkzeuges bei der Kompression der eingefüllten Formpreßmasse reduziert, weil die Faserpartikel nur relativ dünn mit flüssigem Kunststoff "benetzt" sind und dieser Bindemittelanteil durch Oberflächenkräfte an den Faserpartikeln festgehalten wird.

Die für die zweite Fertigungsstufe vorbereitete Formpreßmasse ist dank der verbliebenen Verformbarkeit der umhüllten Faserpartikel durch mechanischen Druck komprimierbar und verdichtbar, so daß die zunächst bestehenden Poren innerhalb der Masse weitgehend beseitigt werden können.

Für das kalt aushärtbare Bindemittel werden Bindemittel auf der Basis von kaltaushärtbarem Polyurethan vorgeschlagen. Die Verwendung dieser Bindemittel ist im Gießereiwesen bei der Herstellung von kalt aushärtbaren Gießkernen bekannt, bei denen der Kernsand mit Polyurethan-Bindern gebunden wird. Dazu werden dem Kernsand zwei Komponenten, nämlich eine Polyetherharz-Komponente und eine Polyisocyanat-Komponente zugegeben. Die Aushärtung erfolgt dabei entweder durch Einleiten einer verdampfbaren Katalysatorflüssigkeit durch die verzweigten und insgesamt gasdurchlässigen Poren des Kernes (sog. "Cold-Box-Verfahren") oder durch Zumischung eines basischen Katalysators in die Polyetherharz-Komponente (sog. "Cold-Box-Selbsthärteverfahren").

Als Katalysatoren kommen basisch wirkende Substanzen zum Einsatz, bspw. Amine wie Methylamin, Dimethylamin, Trimethylamin, Ethylamin, Diethylamin, Triethylamin, Dimethylethylamin und Gemische daraus.

Eine Weiterbildung des erfindungsgemäßen Verfahrens sieht vor, daß als Bindemittel ein Zwei-Komponenten-System mit einem Polyetherharz als Harzkomponente und einem Polyisocyanat als Reaktionspartner verwendet wird, wobei die katalytisch initiierbare Aushärtereaktion durch Zugabe von gasförmigem Katalysator in die noch lockere, im schon geschlossenen Formwerkzeug befindliche Formmasse eingeleitet wird. Das Katalysatorgas verteilt sich durch das zunächst noch engmaschige und sich durch die gesamte Formmasse verzweigende Porennetzwerk in der gesamten Formmasse. In diesem Begasungszustand wird noch kein oder ein nur sehr geringer Druck auf die Formmasse ausgeübt. Die feinen, werkzeugintegrierten Katalysator-Zugabestellen sind über die gesamte Innenfläche des Formwerkzeuges verteilt. Die Zugabeöffnungen sind bezüglich Größe, Form (Schlitz, Bohrung), Verteilungsdichte und Lokalisierung werkstückbezogen empirisch optimiert. Bevorzugt sind seitliche Einlaßöffnungen im Werkzeug, die senkrecht zur Richtung des Preßdrucks verlaufen. Die Aushärtereaktion kann durch geeignete Auswahl von Art und Menge des Katalysators, die Modifikationen der einzelnen Komponenten und den Zusatz eines oder mehrerer geeigneter Lösemittel gezielt verzögert werden. Nach dem verzögerten Einsetzen der Aushärtereaktion, die mit vorgebbarer Reaktionsgeschwindigkeit abläuft, wird zeitlich gezielt Preßdruck auf die Formmasse über die in Schließrichtung zueinander beweglichen Formhälften ausgeübt. Dadurch wird das Katalysatorgas in den Poren eingeschlossen. Im Maß der Zunahme der Festigkeit des aushärtenden Harzes kann auch der Preßdruck - zeitlich abgestimmt - gesteigert werden. Durch den Druck und die damit bewirkte Kompression der Formmasse werden die Poren verkleinert, der Porenanteil reduziert und die Dichte erhöht. Der Druck kann kontinuierlich oder gestuft gesteigert werden.

Der Katalysator kann auch in flüssiger Form in Mikrokapseln eingeschlossen sein. Die Mikrokapseln sind schüttfähig und können der Preßmasse oder dem Bindemittel als Pulver zugesetzt werden. Der Katalysator wird z. Bsp. aus den Mikrokapseln durch den auf die Formmasse ausgeübten Preßdruck freigesetzt. Er kann aber auch durch Auflösen der Mikrokapseln unter Einwirkung der Komponenten freigesetzt werden.

Eine weitere bevorzugte Weiterbildung des erfindungsgemäßen Verfahrens besteht darin, als Bindemittel ein selbstaushärtendes Zwei-Komponenten-System auf der Basis von Polyurethan zu verwenden. Dabei wird in die Polyetherharz-Komponente ein Katalysator eingemischt, dessen Reaktivität und/oder Konzentration bezogen auf die Menge des Harzes zu einer zeitlich verzögert einsetzenden Härtereaktion führt. Auch die Reaktionsgeschwindigkeit der Aushärtereaktion ist z. Bsp. durch geeignete Formulierung der Harzkomponenten einstellbar. Die Einstellung der Reaktionsgeschwindigkeit erfolgt unabhängig von der Einstellung des Beginns der Aushärtereaktion.

Ferner wird der Einsatz von Kaltaushärteverfahren mit anderen Basisstoffen als Polyurethanen vorgeschlagen. Bspw. sind kalt aushärtende Bindemittel in Form von säurehärtenden oder SO₂-härtenden Systemen auf der Basis von z.B. Furanharzen oder Phenolharzen geeignet. Diese Bindemittel sind von Hause aus spröde, so daß eine Rückfederung beim Öffnen des Formwerkzeuges vermieden wird und der resultierende Grünling sich durch eine hohe Maßhaltigkeit auszeichnet. Ein weiterer Vorteil besteht darin, daß man die Systeme langsamer einstellen kann, so daß die Aushärtung mit einer größeren Verzögerung erfolgt als bei den Polyurethan-Systemen. So bleibt mehr Zeit zum Befüllen der Preßform. Unter Umständen ist dann eine längere Preßzeit erforderlich.

Als kalt aushärtendes Bindemittel sind auch Mischungen der soeben beschriebenen Polyurethansysteme mit kalt aushärtenden Phenolharzen denkbar. Das Verhältnis von Polyurethansystem zu Phenolharz liegt vorteilhafterweise bei 5 : 1 bis 1 : 1.

Eine weitere vorteilhafte Weiterbildung besteht darin, daß ein bei geringeren Temperaturen (bis 100°C) und kürzeren Zeiten ablaufendes Warmaushärtverfahren eingesetzt wird, insbesondere dann, wenn die Fasern vorher umhüllt wurden. Geeignet ist z. Bsp. das aus der im Gießereiwesen üblichen Kernherstellung bekannte Phenolharz-System aus Phenolen, Formaldehyd und Hexamethylentetramin ("Croning-Verfahren" oder "Shell-Moulding-Process"). Ggf. kann ein Katalysator zugesetzt werden. Das Verhältnis von Phenolen zu Formaldehyd ist zunächst kleiner als 1. Durch Erwärmung wird unter Einwirkung des beigegebenen Hexamethylendiamins Formaldehyd freigesetzt, so daß sich das Verhältnis von Phenolen zu Formaldehyd umkehrt und größer als 1 wird. Die lösliche Resolstufe geht über die weiche Resitolstufe - die Preßmasse kann dann komprimiert werden, wobei vorteilhafterweise eine Dichte von 1,3 angestrebt werden sollte - in die feste Resitstufe über.

Das erfindungsgemäße Verfahren sieht in besonders vorteilhafter Weise vor, daß insbesondere unbehandelte, z. Bsp. unbeschichtete Verstärkungsfasern mit Bindemittel und ggf. Zuschlag- bzw. Füllstoffen vermischt und zu einem Grünkörper verpreßt werden. Geeignete Füllstoffe sind z. Bsp. Kohlenstaub, Ruß oder Graphit, die die späteren Eigenschaften des Formkörpers positiv beeinflussen, indem sie z. Bsp. als Kohlenstoffquelle dienen. Die Füllstoffe können ggf. mit Benetzungsmittel versehen sein.

Bei der Verwendung selbstaushärtender Systeme wird die Pressung erst dann eingeleitet, wenn die Aushärtereaktion bereits eingesetzt hat und das System eine hochviskose bis gummiartige Konsistenz hat. Dies kann man ggf. mit Referenzsystemen überwachen. Dadurch wird die Gefahr, daß der Binder aus den Fugen des Formwerkzeugs austreten könnte, weiter verringert.

Die Preßmasse kann kalt oder heiß, z. Bsp. in einer beheizten Preßvorrichtung, gepreßt werden.

Im folgenden wird ein Ausführungsbeispiel der vorliegenden Erfindung näher beschrieben.

Es wurden Prüfkörper mit einem Durchmesser von 5 cm hergestellt.

Dazu wurden nicht konditionierte Kurzfaserbündel aus Kohlenfasern der Firmen SGL oder Toray mit 30 bis 35 Gew.-% eines aus der Kernmacherei (Croning-Verfahren) bekannten Phenolharzsystems aus Phenolen, Formaldehyd, Hexamethylentetramin und einem sauren Katalysator in einem Behältnis unter Rühren vermischt. Während des Mischvorgangs wurde in das Behältnis Heißluft eingeblasen. Nachdem das Phenolharz bis hin zur Resitolstufe ausgehärtet war und eine trockene, biegsame, kautschukartige Konsistenz aufwies, wurden die umhüllten Fasern mit einem kalthärtenden Bindemittelsystem bestehend aus einem Benzyletherharz und einem Polyisocyanat vorsichtig zu einer Preßmasse vermischt. In der Benzyletherharz-Komponente war eine Base (z. Bsp. Pyridin oder Dimethylethylamin) als basischer Katalysator zugemischt. Ein Rest des Zwei-Komponenten-Systems wurde als Referenzprobe zurückbehalten. Die Konzentrationen der Komponenten und der Lösemittel wurde so eingestellt, daß die Aushärtereaktion ausreichend verzögert wurde, um die Preßform befüllen zu können.

Die noch warme Preßmasse wurde in eine beheizte Preßform gefüllt. Sobald die Referenzprobe eine hochviskose Konsistenz hatte, wurde mit der Pressung begonnen. Der Preßdruck betrug etwa 150 N/cm². Nach 8 Minuten wurde der Prüfkörper aus der Form genommen. Er erwies sich als fester maßhaltiger Körper mit scharfen, gleichmäßigen Konturen. Die Dichte wurde mit 1,34 bis 1,44 g/cm³ berechnet.

In einem zweiten Versuch wurden dieselben Kurzfaserbündel mit 25 Gew.-% desselben reaktiven Zwei-Komponenten-Systems vorsichtig vermischt und ca. 45 min gerührt, bis der Polyurethan-Binder ausgehärtet war (Totmischung). Die Konzentrationen der Komponenten und der Lösemittel wurden so eingestellt, daß der resultierende Binder relativ weich und wenig spröde war. Dabei entstand ein Granulat mit Partikeldurchmessern von etwa 2 bis 6 mm. Das Granulat wurde mit 12 Gew.-% bezogen auf die Fasermenge desselben reaktiven Zwei-Komponenten-Systems zu einer Preßmasse vermischt. Diesmal waren die Konzentrationen der Komponenten und der Lösemittel so eingestellt, daß der resultierende Polyurethan-Binder relativ hart und spröde war. Die Preßmasse wurde wie oben beschrieben gepreßt. Der resultierende Prüfkörper war ebenfalls fest und maßhaltig mit scharfen Konturen. Die Dichte wurde mit 1,34 bis 1,44 g/cm³ berechnet.

In einem dritten Versuch wurden dieselben Kurzfaserbündel ohne Umhüllung mit 35 Gew.-% desselben niedrigviskosen reaktiven Zwei-Komponenten-Systems gemischt und wie beschrieben gepreßt, sobald die Referenzprobe eine hochviskose Konsistenz hatte. Der resultierende Prüfkörper war gleichfalls fest und maßhaltig mit scharfen Konturen und hatte eine Dichte von 1,3 bis 1,4 g/cm³.

Eine Rückfederung bei der Rücknahme des Preßdruckes fand nicht statt.

## Patentansprüche

1. Verfahren zur Herstellung von endformnahen Formkörpern aus Preßmassen, umfassend folgende Verfahrensschritte:
- Vermischen von Verstärkungsfasern, Faserbündeln, Fasergeweben, Fasermatten und/oder in Wirrlage zusammengesetzten Faseragglomeraten auf Basis von Metall, Glas, Kohlenstoff, Stickstoff, Silizium und/oder Bor, eines oder mehrerer kalt aushärtbarer carbonisierbarer Kunststoffe als Bindemittel, eines Katalysators zum Starten der Aushärtereaktion und ggf. eines oder mehrerer Zuschlagstoffe bzw. Füllstoffe zu einer Preßmasse,
- Einfüllen der Preßmasse in eine Preßform
- Pressen der Preßmasse in der Preßform unter Druckeinwirkung zu einem Formkörper, wobei die Druckeinwirkung erst dann eingeleitet wird, wenn die Aushärtereaktion bereits begonnen hat
- Entnehmen des Formkörpers aus der Preßform.

2. Verfahren nach Anspruch 1,
**dadurch gekennzeichnet,**
**daß** in einer ersten Verfahrensstufe die Verstärkungsfasern mit einem aushärtbaren carbonisierbaren Umhüllungskunststoff überzogen werden, und in einer zweiten Verfahrensstufe die mit dem Umhüllungskunststoff überzogenen Versrärkungsfasern mit einem kalt aushärtbaren carbonisierbaren Bindemittel zu der eigentlichen Preßmasse vermischt werden.

3. Verfahren nach Anspruch 2,
**dadurch gekennzeichnet,**
**daß** in der ersten Verfahrensstufe bezogen auf den Faseranteil eine Menge von etwa 15 bis 30 Gew.-% des Umhüllungskunststoffs unter Zugabe eines Katalysators mit den Fasern vermischt und gerührt werden, bis der Umhüllungskunststoff ausgehärtet ist.

4. Verfahren nach Anspruch 2 oder 3,
**dadurch gekennzeichnet,**
**daß** in der zweiten Verfahrensstufe bezogen auf die vorumhüllten Fasern eine Menge von etwa 10 bis 20 Gew.-% des kalt aushärtbaren carbonisierbaren Bindemittels mit den überzogenen Fasern zu einer Preßmasse vermischt wird.

5. Verfahren nach einem der Ansprüche 2 bis 4,
**dadurch gekennzeichnet,**
**daß** für die erste Verfahrenstufe ein warm aushärtbarer oder kalt aushärtbarer Umhüllungskunststoff auf der Basis eines Polyadditions- oder Polykondensationsprodukts verwendet wird.

6. Verfahren nach einem der Ansprüche 2 bis 5,
**dadurch gekennzeichnet,**
**daß** der in der ersten Verfahrensstufe verwendete Umhüllungskunststoff so weich eingestellt wird, daß die resultierenden überzogenen Verstärkungsfasern bzw. die daraus herstellbare Preßmasse komprimierbar sind.

7. Verfahren nach einem der Ansprüche 2 bis 6,
**dadurch gekennzeichnet,**
**daß** das in der zweiten Verfahrensstufe verwendete Bindemittel härter bzw. spröder eingestellt ist als der in der ersten Verfahrensstufe verwendete Umhüllungskunststoff.

8. Verfahren nach einem der Ansprüche 2 bis 7,
**dadurch gekennzeichnet,**
**daß** zur Optimierung der Härte des verwendeten Bindemittels und Umhüllungskunststoffs bzw. der Schichtdicke der Umhüllung die Verfahrensparameter Menge, Viskosität im Ausgangszustand sowie die Abstimmung des Zeitverzugs der Aushärtereaktion und der Reaktionsgeschwindigkeit der Aushärtereaktion mit der Verdichtungsgeschwindigkeit während des Preßvorgangs einbezogen werden.

9. Verfahren nach Anspruch 1,
**dadurch gekennzeichnet,**
**daß** die Verstärkungsfasern ohne Umhüllungskunststoff in einem einstufigen Prozeß mit dem kalt aushärtbaren Bindemittel zu einer Preßmasse vermischt werden.

10. Verfahren nach Anspruch 9,
**dadurch gekennzeichnet,**
**daß** etwa 20 bis 50 Gew.-% Bindemittel bezogen auf die Menge der Verstärkungsfasern verwendet werden.

11. Verfahren nach einem der vorhergehenden Ansprüche,
**dadurch gekennzeichnet,**
**daß** ein vor der Aushärtung niedrigviskoses Bindemittel verwendet wird und die Druckeinwirkung erst dann eingeleitet wird, wenn das Bindemittel im Laufe der Aushärtereaktion eine hochviskose Konsistenz aufweist.

12. Verfahren nach einem der vorhergehenden Ansprüche,
**dadurch gekennzeichnet,**
**daß** die Menge und/oder Formulierung des Bindemittels bzw. die Konzentrationsverhältnisse von Bindemittel und Katalysator so eingestellt werden, daß die Aushärtereaktion erst nach Beendigung des Mischvorgangs und Befüllen der Preßform zeitverzögert einsetzt.

13. Verfahren nach einem der vorhergehenden Ansprüche,
**dadurch gekennzeichnet,**
**daß** mit zunehmender Festigkeit des Bindemittels der Preßdruck stufenweise oder kontinuierlich erhöht wird.

14. Verfahren nach einem der vorhergehenden Ansprüche,
**dadurch gekennzeichnet,**
**daß** konditionierte oder unkonditionierte Kohlenstoff-Fasern oder -Faserbündel mit einer Faserlänge von mindestens 10 mm verwendet werden.

15. Verfahren nach einem der vorhergehenden Ansprüche,
**dadurch gekennzeichnet,**
**daß** kalt aushärtbare Bindemittel auf der Basis von Phenolharzsystemen oder Polyurethanen verwendet werden.

16. Verfahren nach Anspruch 15,
**dadurch gekennzeichnet,**
**daß** bei der Verwendung von Polyurethanen Zwei-Komponenten-Svsteme mit einer Polyetherharz-Komponente und einer Polyisocyanat-Komponente sowie einem basischen Katalysator verwendet werden.

17. Verfahren nach Anspruch 16,
**dadurch gekennzeichnet,**
**daß** als basischer Katalysator ein Amin oder eine Mischung aus zwei oder mehr Aminen, insbesondere aus der Gruppe bestehend aus Methylamin, Dimethylamin, Trimethylamin, Ethylamin, Diethylamin, Triethylamin, Dimethylethylamin, verwendet wird.

18. Verfahren nach einem der Ansprüche 16 oder 17,
**dadurch gekennzeichnet,**
**daß** der basische Katalysator als Gas in die mit der Preßmasse befüllte Preßform eingeleitet wird, wobei zunächst kein oder nur ein sehr geringer Druck auf die Preßmasse ausgeübt wird.

19. Verfahren nach Anspruch 18,
**dadurch gekennzeichnet,**
**daß** der gasförmige Katalysator seitlich in die Preßform eingeleitet wird.

20. Verfahren nach einem der Ansprüche 16 oder 17,
**dadurch gekennzeichnet,**
**daß** der Katalysator in Form von in Mikrokapseln eingeschlossener Flüssigkeit der Preßmasse zugegeben wird, wobei die Mikrokapseln nach Befüllen der Form unter Einwirkung des Preßdrucks oder unter Einwirkung des Bindemittels zerstört werden.

21. Verfahren nach einem der Ansprüche 16 oder 17,
**dadurch gekennzeichnet,**
**daß** selbstaushärtende Zwei-Komponenten-Systeme verwendet werden, die den basischen Katalysator in der Harzkomponente enthalten.

22. Verfahren nach einem der Ansprüche 1 bis 14,
**dadurch gekennzeichnet,**
**daß** kalt aushärtbare carbonisierbare Bindemittel auf der Basis von säurehärtenden oder SO₂-härtenden Systemen verwendet werden.

23. Verfahren nach Anspruch 22,
**dadurch gekennzeichnet,**
**daß** Bindemittel auf der Basis von Furanharzen oder Phenolharzen, vorzugsweise Phenolharz-Systeme enthaltend Phenole, Formaldehyd und Hexamethylentetramin und ggf. Katalysator, verwendet werden.

24. Verfahren nach einem der vorhergehenden Ansprüche,
**dadurch gekennzeichnet,**
**daß** als Füllstoffe Kohlenstaub, Ruß und/oder Graphit verwendet werden.

## Claims

1. A process for the production of near finished moulded parts from moulding compound comprising the following process steps:
- the mixing of reinforcing fibres, fibre bundles, fibrous fabric, fibre mats and/or fibre agglomerates constituted in random orientation based on metal, glass, carbon, nitrogen, silicon and/or boron, one or more low temperature curing plastics as a binding agent, a catalyst to start the curing reaction and, where applicable, one or more additives or fillers, to form a moulding compound,
- the placing of the moulding compound into a compression mould,
- the moulding of the moulding compound in the compression mould with the application of pressure to form a moulded part, no pressure being applied until after the curing reaction has started,
- the removal of the moulded part from the compression mould.

2. A process in accordance with claim 1,
**characterised in that**
in a first process stage the reinforcing fibres are coated with a curable, carbonisable sheathing plastic, and in a second process stage the reinforcing fibres coated with the sheathing plastic are mixed with a low temperature curing carbonisable binding agent to form the moulding compound itself.

3. A process in accordance with claim 2,
**characterised in that**
in the first process stage a quantity of some 15 to 30 % by weight of the sheathing plastic in relation to the fibre content is mixed with the fibres with the addition of a catalyst and stirred until the sheathing plastic has cured.

4. A process in accordance with claim 2 or 3,
**characterised in that**
in the second process stage a quantity of some 10 to 20 % by weight of the low temperature curing carbonisable binding agent in relation to the pre-sheathed fibres is mixed with the coated fibres to form a moulding compound.

5. A process in accordance with one of claims 2 to 4,
**characterised in that**
a high temperature curing or low temperature curing sheathing plastic based on a polyaddition or polycondensation product is used for the first process stage.

6. A process in accordance with one of claims 2 to 5,
**characterised in that**
the sheathing plastic used in the first process stage is made soft enough to ensure that the resulting coated reinforcing fibres and the moulding compound which can be produced therefrom are compressible.

7. A process in accordance with one of claims 2 to 6,
**characterised in that**
the binding agent used in the second process stage is harder or more brittle than the sheathing plastic used in the first process stage.

8. A process in accordance with one of claims 2 to 7,
**characterised in that**
in order to optimise the hardness of the binding agent and sheathing plastic used and the thickness of the layer of sheathing, the process parameters of quantity, initial viscosity and the timing of the delay of the curing reaction and the reaction speed of the curing reaction in relation to the compression speed during the moulding process are taken into account.

9. A process in accordance with claim 1,
**characterised in that**
the reinforcing fibres without sheathing plastic are mixed with the low temperature curing binding agent to form a moulding compound in a single stage process.

10. A process in accordance with claim 9,
**characterised in that**
some 20 to 50 % by weight of binding agent in relation to the quantity of reinforcing fibres is used.

11. A process in accordance with one of the preceding claims,
**characterised in that**
a binding agent which has low viscosity prior to curing is used and no pressure is applied until the binding agent reaches a high viscosity consistency during the curing reaction.

12. A process in accordance with one of the preceding claims,
**characterised in that**
the quantity and/or formulation of the binding agent and the concentration ratios of the binding agent and the catalyst are determined such that the start of the curing reaction is delayed until the mixing process is complete and the compression mould filled.

13. A process in accordance with one of the preceding claims,
**characterised in that**
the moulding pressure is raised in stages or continually as the strength of the binding agent increases.

14. A process in accordance with one of the preceding claims,
**characterised in that**
conditioned or unconditioned carbon fibres or fibre bundles with a fibre length of at least 10 mm are used.

15. A process in accordance with one of the preceding claims,
**characterised in that**
low temperature curing binding agents based on phenol resin systems or polyurethanes are used.

16. A process in accordance with claim 15,
**characterised in that**
where polyurethanes are used, two-component systems with one polyether resin component and one polyisocyanate component and a base catalyst are employed.

17. A process in accordance with claim 16,
**characterised in that**
an amine or a mixture of two or more amines, in particular from the group consisting of methylamine, dimethylamine, trimethylamine, ethylamine, diethylamine, triethylamine and dimethylethylamine, is used.

18. A process in accordance with one of claims 16 or 17,
**characterised in that**
the base catalyst is introduced into the compression mould filled with moulding compound as a gas, initially no or only a very slight pressure being exerted on the moulding compound.

19. A process in accordance with claim 18,
**characterised in that**
the gaseous catalyst is introduced laterally into the compression mould.

20. A process in accordance with one of claims 16 or 17,
**characterised in that**
the catalyst is added to the moulding compound in the form of liquid enclosed in microcapsules, the microcapsules being destroyed by the application of moulding pressure or under the effect of the binding agent once the mould is filled.

21. A process in accordance with one of claims 16 or 17,
**characterised in that**
self-curing two-component systems which contain the base catalyst in the resin components are used.

22. A process in accordance with one of claims 1 to 14,
**characterised in that**
low temperature curing carbonisable binding agents based on acid hardening or SO₂ hardening systems are used.

23. A process in accordance with claim 22,
**characterised in that**
binding agents based on furan resins or phenol resins, preferably phenol resin systems containing phenols, formaldehyde and hexamethylene tetramine and where applicable a catalyst, are used.

24. A process in accordance with one of the preceding claims,
**characterised in that**
carbon dust, soot and/or graphite are used as fillers.

## Revendications

1. Procédé pour fabriquer des corps moulés pratiquement finis à partir de masses de pressage, comprenant les étapes opératoires suivantes:
- mélange de fibres de renfort, d'écheveaux de fibres, de tissus fibreux, de mats de fibres et/ou d'agglomérats de fibres rassemblées dans une position entremêlée, à base de métal, de verre, de carbone, d'azote, de silicium et/ou de bore, d'une ou de plusieurs matières plastiques, durcissables à froid, pouvant être carbonisées, en tant que liants, d'un catalyseur pour faire démarrer la réaction de durcissement et éventuellement d'un ou de plusieurs matériaux additifs ou matériaux formant charge pour former une masse de pressage,
- introduction de la masse de pressage dans un moule de pressage,
- pressage de la masse de pressage dans le moule de pressage moyennant l'action d'une pression pour former un corps moulé, l'action de pression étant déclenchée uniquement lorsque la réaction de durcissement a déjà commencé,
- retrait du corps moulé hors du moule de pressage.

2. Procédé selon la revendication 1, **caractérisé en ce**
**que** lors d'une première étape opératoire, on recouvre les fibres de renfort par une matière plastique d'enrobage durcissable, pouvant être carbonisée, et lors d'une seconde étape opératoire, on mélange les fibres de renfort recouvertes par la matière plastique d'enrobage à un liant durcissable à froid, pouvant être carbonisé, pour former la masse de pressage proprement dite.

3. Procédé selon la revendication 2, **caractérisé en ce que** lors de la première étape opératoire, on mélange une quantité d'environ 15 à 30 % en poids, rapportés au pourcentage de fibres, de la matière plastique d'enrobage en ajoutant un catalyseur aux fibres et on réalise une agitation jusqu'à ce que la matière plastique d'enrobage ait durci.

4. Procédé selon la revendication 2 ou 3, **caractérisé en ce que** lors de la seconde étape opératoire, on mélange une quantité d'environ 10 à 20 % en poids, rapportés aux fibres préalablement enrobées, du liant durcissable à froid, pouvant être carbonisé, avec les fibres recouvertes pour former une masse de pressage.

5. Procédé selon l'une des revendications 2 à 4, **caractérisé en ce que** pour la première étape opératoire, on utilise une matière plastique d'enrobage durcissable à chaud ou durcissable à froid à base d'un produit de polyaddition ou de polycondensation.

6. Procédé selon l'une des revendications 2 à 5, **caractérisé en ce que** la matière plastique d'enrobage utilisé dans la première étape opératoire est réglé de manière à être suffisamment souple pour que les fibres de renfort recouvertes obtenues ou la masse de pressage, pouvant être fabriquée à partir de ces fibres, puissent être comprimées.

7. Procédé selon l'une des revendications 2 à 6, **caractérisé en ce que** le liant utilisé lors de la seconde étape opératoire est réglé de manière à être plus dur ou plus cassant que la matière plastique d'enrobage utilisée dans la première étape opératoire.

8. Procédé selon l'une des revendications 2 à 7, **caractérisé en ce que** pour optimiser la dureté du liant utilisé et de la matière plastique d'enrobage ou de l'épaisseur de couche de l'enrobage, on rapporte les paramètres du procédé, à savoir la quantité, la viscosité dans l'état de départ et le réglage d'accord du retard de la réaction de durcissement et la vitesse de réaction de durcissement, à la vitesse de densification pendant l'opération de pressage.

9. Procédé selon la revendication 1, **caractérisé en ce que** les fibres de renfort sont mélangées sans matière plastique d'enrobage lors d'un processus en une seule étape avec le liant durcissable à froid pour former une masse de pressage.

10. Procédé selon la revendication 9, **caractérisé en ce qu'**on utilise environ 20 à 50 % en poids de liant rapportés à la quantité des fibres de renfort.

11. Procédé selon l'une des revendications précédentes, **caractérisé en ce qu'**on utilise un liant faiblement visqueux avant le durcissement et qu'on applique l'action de pression uniquement lorsque le liant possède, au cours de l'action de durcissement, une consistance très visqueuse.

12. Procédé selon l'une des revendications précédentes, **caractérisé en ce que** la quantité et/ou la formulation du liant et/ou les conditions de concentration du liant et du catalyseur sont réglées de telle sorte que la réaction de durcissement s'effectue d'une manière retardée dans le temps après la fin de l'opération de mélange et après le remplissage du moule de pressage.

13. Procédé selon l'une des revendications précédentes, **caractérisé en ce que** lorsque la rigidité du liant augmente, la pression de pressage est accrue d'une manière échelonnée ou continue.

14. Procédé selon l'une des revendications précédentes, **caractérisé en ce qu'**on utilise des fibres de carbone ou un écheveau de fibres de carbones conditionnées ou non conditionnées possédant une longueur de fibres d'au moins 10 mm.

15. Procédé selon l'une des revendications précédentes, **caractérisé en ce qu'**on utilise un liant durcissable à froid à base de systèmes de résines phénoliques ou de polyuréthanes.

16. Procédé selon la revendication 15, **caractérisé en ce que** dans le cas de l'utilisation de polyuréthanes, on utilise des systèmes à deux constituants comportant un constituant formé d'une résine de polyéther et un constituant formé de polyisocyanate ainsi qu'un catalyseur basique.

17. Procédé selon la revendication 16, **caractérisé en ce qu'**on utilise comme catalyseur de base une amine ou un mélange formé de deux ou de plusieurs amines, tirées notamment du groupe constitué par la méthylamine, la diméthylamine, la triméthylamine, l'éthylamine, la diéthylamine, la triéthylamine, la diméthyléthylamine.

18. Procédé selon la revendication 16 ou 17, **caractérisé en ce que** le catalyseur basique est introduit sous la forme de gaz dans le moule de pressage rempli par la masse de pressage, auquel cas tout d'abord aucune pression n'est appliquée à la masse de pressage ou une seule une très faible pression est appliquée.

19. Procédé selon la revendication 18, **caractérisé en ce que** le catalyseur sous forme gazeuse est introduit latéralement dans le moule de pressage.

20. Procédé selon l'une des revendications 16 ou 17, **caractérisé en ce que** le catalyseur est ajouté sous la forme d'un liquide renfermé dans des microcapsules, à la masse de pressage, les microcapsules étant détruites après le remplissage du moule sous l'action de la pression de pressage ou sous l'action du liant.

21. Procédé selon l'une des revendications 16 ou 17, **caractérisé en ce qu'**on utilise des systèmes auto-durcissables à deux constituants, qui contiennent le catalyseur basique dans le constituant formé par la résine.

22. Procédé selon l'une des revendications 1 à 14, **caractérisé en ce qu'**on utilise un liant durcissable à froid, pouvant être carbonisé, à base de systèmes durcissant sous l'action d'un acide ou durcissant sous l'action du SO₂.

23. Procédé selon la revendication 22, **caractérisé en ce qu'**on utilise un liant à base de résines furanes ou de résines phénoliques, de phénols contenant de préférence des systèmes de résines phénoliques, de formaldéhyde et d'hexaméthylènetétramine et éventuellement d'un catalyseur.

24. Procédé selon l'une des revendications précédentes, **caractérisé en ce qu'**on utilise comme matériau de charge, du carbone, de la suie et/ou du graphite.
